Europäisches Patentamt

(19) European Patent Office

Office européen des brevets

(11) Numéro de publication: **0 067 107 B1**

(12) **FASCICULE DE BREVET EUROPEEN**

(45) Date de publication du fascicule du brevet:
16.01.85

(51) Int. Cl.⁴: **B 23 Q 7/04**, B 23 Q 7/10

(21) Numéro de dépôt: **82401018.5**

(22) Date de dépôt: **04.06.82**

(54) **Dispositif de séparation, d'orientation et de positionnement de pièces de forme générale plate.**

(30) Priorité: **10.06.81 FR 8111435**

(43) Date de publication de la demande:
**15.12.82 Bulletin 82/50**

(45) Mention de la délivrance du brevet:
**16.01.85 Bulletin 85/3**

(84) Etats contractants désignés:
**DE IT**

(56) Documents cités:
**DE - A - 1 531 969
FR - A - 2 383 762
GB - A - 688 533
GB - A - 1 348 368
US - A - 1 936 401
US - A - 1 970 023
US - A - 2 664 790
US - A - 3 583 576**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Le Tiec, Patrick, 24, rue de Paris,
F-92190 Meudon (FR)**
Inventeur: **Lacroix, Marc, 24, rue Jules Bidard,
F-78220 Viroflay (FR)**

## Description

L'invention concerne l'amenage successif en bonne position et en bonne orientation de pièces de forme générale sensiblement plate, en particulier des crabots d'axes de boîtes de vitesses, pour l'alimentation d'une machine automatique à souder les crabots sur les axes.

Habituellement, les crabots sont véhiculés sur chant dans un rail vibrant jusqu'à un drageoir non vibrant placé en bout de rail et qui porte une réserve de quelques crabots. Périodiquement, le crabot placé en bout de la réserve tombe de quelques millimètres afin d'offrir une résistance au porte-pièce de la machine automatique qui vient le saisir. Le drageoir comporte deux retenues éclipsables qui retiennent le premier crabot et qui sont éclipsées par deux doigts montés sur le porte-pièces lorsque celui-ci vient prendre le crabot.

Les inconvénients de cette technique sont d'abord la grande difficulté de sélectionner les pièces approvisionnées en vrac dans un bol vibrant pour pouvoir ensuite les cheminer sur chant dans le rail vibrant. Certaines formes de crabot rendent même cette sélection automatique impossible et nécessitent des techniques beaucoup plus sophistiquées. Ensuite, le dispositif est peu fiable et sujet à de nombreux coincements de sorte que les deux retenues éclipsables ne retiennent pas toujours efficacement les crabots, surtout au moment d'une prise de pièces par le porte-pièces, et de nombreux crabots tombent alors sur la plate-forme de la machine.

On a déjà proposé dans le document GB-A N° 688533 un dispositif de séparation, d'orientation et de positionnement de pièces qui reçoit ces pièces, distribuées en file continue sur un rail magasin par un dispositif auxiliaire et les amenant une par une dans une orientation et une position précises pour être reprises par un porte-pièces, le dispositif comportant un basculeur actionnable par un vérin entre une première position relevée et une deuxième position basculée, ce basculeur comportant un support faisant suite au rail magasin dans la position relevée du basculeur pour recevoir la première pièce du magasin, des moyens de butée arrêtant l'ensemble des pièces, ce support comportant également un dispositif de retenue agencé pour empêcher l'échappement de la pièce sur le basculeur pendant le basculement de celui-ci.

Le but de l'invention est de proposer un dispositif du type de celui de l'art antérieur qui puisse être alimenté avec des pièces positionnées à plat sur un rail, alimentation beaucoup plus facile à réaliser, et qui en outre produise la séparation de ces pièces, leur basculement pour les orienter sur chant, et leur retenue efficace jusqu'à la reprise par le porte-pièces, et enfin qui soit d'une grande fiabilité et d'une grande simplicité de réalisation.

Dans ce but, l'invention propose un dispositif caractérisé en ce que le dispositif sépare, oriente et positionne des pièces de forme sensiblement plate approvisionnées à plat sur le rail magasin, l'ensemble comportant en outre des touches d'arrêt portées par une pièce basculante rappelée par un ressort de rappel pour arrêter la première pièce restant sur le rail lors du basculement du basculeur, avec un mécanisme permettant de dégager ces touches de leur position active lorsque le basculeur est en position relevée, le dispositif de retenue étant monté coulissant horizontalement et parallèlement au support et comportant deux doigts disposés de manière à permettre le passage de chaque nouvelle pièce sous ces doigts mais en même temps à pouvoir libérer le contour de la pièce pour une extraction perpendiculaire à l'aide d'une faible course du dispositif de retenue.

D'autres particularités de l'invention apparaîtront dans la description qui va suivre d'un mode de réalisation pris comme exemple et représenté sur le dessin annexé, sur lequel:

la fig. 1 est une coupe verticale de l'appareil selon I-I de la fig. 2;
la fig. 2 est une vue en bout selon II-II de la fig. 1;

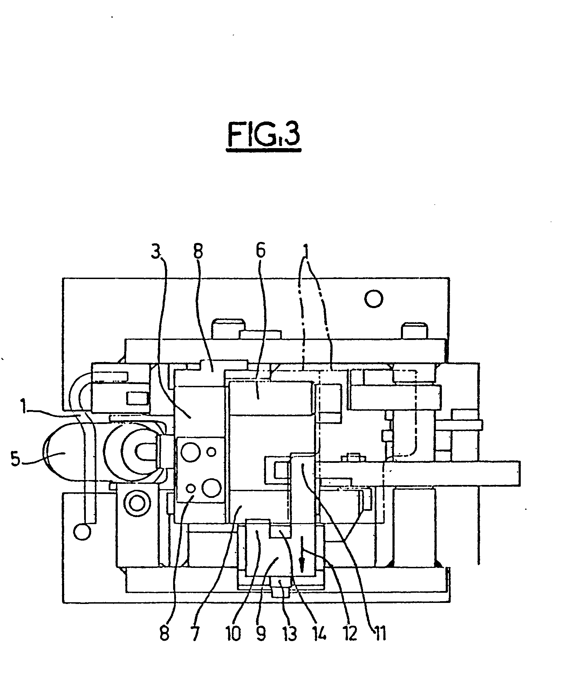

la fig. 3 est une vue de dessus de cet appareil.

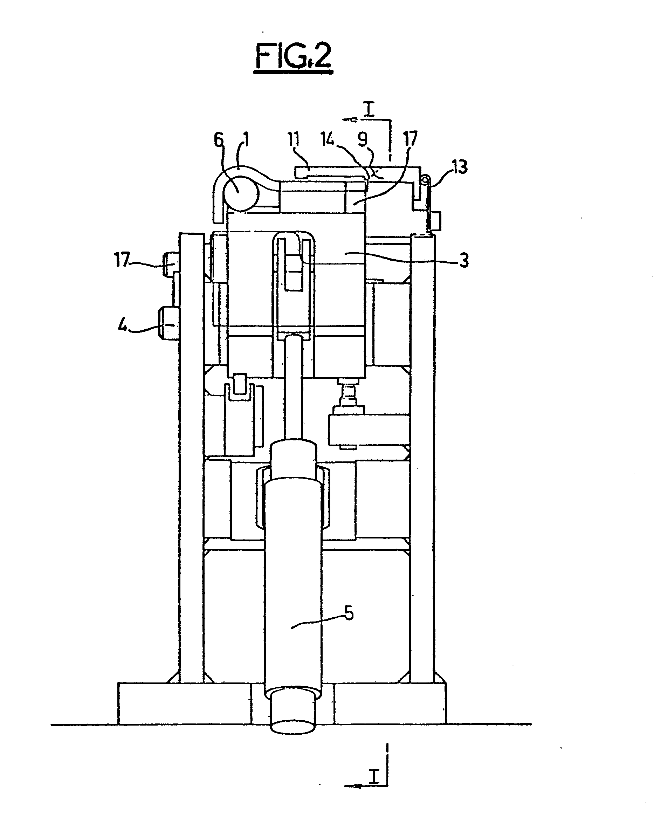

L'exemple de réalisation concerne plus particulièrement l'alimentation d'une machine à souder automatique en crabots d'axes de fourchettes de boîtes de vitesses qui sont des pièces ayant la forme représentée sous la référence 1 sur les figures. Il s'agit de pièces sensiblement plates découpées-cambrées selon le profil visible sur la fig. 2, et l'installation comporte avant tout un bol vibrant recevant ces pièces en vrac et les positionnant en fil continu à plat sur un rail. Cet ensemble de conception classique n'a pas été représenté et il est beaucoup plus facile à réaliser que le dispositif habituel plaçant les pièces sur chant.

Les pièces 1 arrivent donc en se poussant côte à côte en file continue sur un rail 2.

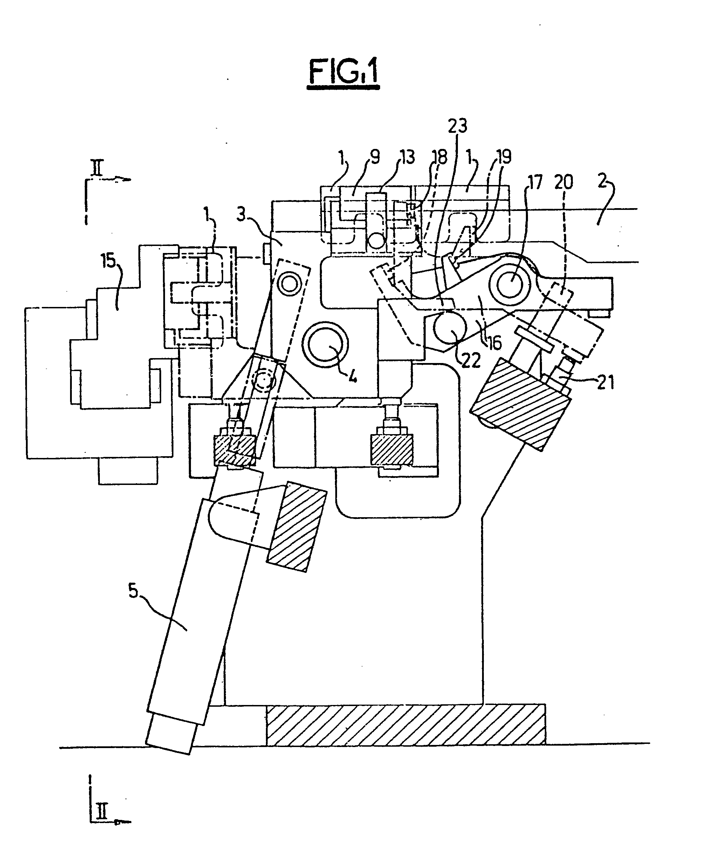

Le dispositif comporte un basculeur 3, susceptible de basculer autour d'un axe horizontal 4 sous l'effet d'un vérin 5 pour passer de la position représentée en trait plein sur la fig. 1 à la position représentée en trait interrompu sur cette même figure. Ce basculeur comporte un support constitué par des parties 6 et 7 qui, dans la première position du basculeur, viennent assurer la continuité des rails 2 pour recevoir la première place 1, avec en outre une butée 8 arrêtant toute la succession des pièces 1 en mouvement.

Par ailleurs, ce basculeur est pourvu également d'un dispositif de retenue 9 qui comporte deux doigts de retenue 10 et 11 disposés de manière que les pièces 1 puissent passer en dessous pour venir en butée contre la butée 8, mais que ces doigts recouvrent légèrement le contour de la première pièce en des points susceptibles d'empêcher celle-ci de s'échapper dans le mouvement de basculement ultérieur du basculeur. En outre, ces points sont choisis également en fonction du contour de la pièce de telle manière qu'un léger mouvement de recul du dispositif de retenue 9 dans le sens de la flèche 11 libère entièrement la pièce pour lui permettre d'être extraite dans le sens perpendiculaire à son propre plan principal. Pour cela le dispositif 9 dans son ensemble est monté coulissant sur le sommet du basculeur 3, en étant rappelé dans le sens opposé à la flèche 12 par un ressort de rappel 13, et il comporte une rampe 14 inclinée dans le sens convenable pour permettre en appuyant sur cette rampe de provoquer le dégagement dans le sens de la flèche 12.

Cela permet par conséquent au vérin d'amener le basculeur 3 de la position verticale à la position horizontale en entraînant avec lui la première pièce 1 sans que celle-ci puisse s'échapper au cours de ce mouvement. Par contre, lorsque le porte-pièces 15 faisant partie de la machine automatique de soudure vient reprendre cette pièce dans la position précise et l'orientation convenable où l'a amené le basculeur précédent, un doigt non représenté, porté par ce porte-pièces, vient agir sur la rampe 14 pour provoquer le dégagement du dispositif de retenue 9 afin de permettre au porte-pièces 15 de saisir la pièce 1 et de l'extraire dans le sens perpendiculaire au plan de la pièce, c'est-à-dire pour cette nouvelle position du basculeur dans le sens horizontal.

Pendant tout ce mouvement de basculement et jusqu'au retour complet du basculeur dans la position initiale, il faut éviter que la succession des pièces, qui suivent la première qui vient d'être extraite, continue son mouvement et vienne tomber en désordre sur la machine.

Pour cela, il est prévu un dispositif de butées escamotables constitué par une pièce basculante 16, articulée autour d'un axe 17 et comportant deux touches de contact 18 et 19, qui dans la position relevée de la pièce 16 viennent contacter des points judicieusement choisis de la pièce 1 immédiatement adjacente à celle qui se trouve sur le support afin d'arrêter sa progression. Pour cela, la pièce basculante 16 se trouve rappelée en position relevée par un ressort de rappel 20 et vient dans cette position s'appuyer sur une butée angulaire réglable 21 qui permet l'ajustement précis de cette position.

Par contre, lorsque le basculeur est dans sa première position représentée sur la fig. 1, ces doigts doivent être escamotés pour permettre le libre passage des pièces 1 du rail 2 vers le support 6,7. Pour cela, la pièce basculante 16 comporte un galet 22 constituant suiveur de came et coopérant avec une came 23 portée par le basculeur 3 pour écarter les touches d'arrêt 18 et 19 de leur position active lorsque le basculeur 3 est tout près d'arriver dans sa première position, comme représenté en trait plein sur la fig. 1.

De la sorte, un seul et même vérin 5 suffit pour assurer tout à la fois la séparation des pièces de la réserve continue, leur transfert par basculement dans une orientation et une position différentes et précises, la retenue de la pièce basculée jusqu'à la reprise par le porte-pièces, et la retenue des pièces de la réserve pendant ce basculement, tous ces mouvements étant par conséquent synchronisés par la seule commande du vérin 5, hydraulique ou pneumatique, et l'ensemble étant particulièrement simple et fiable, même avec des cadences de fonctionnement élevées.

## Revendications

1. Dispositif de séparation, d'orientation et de positionnement de pièces (1) qui reçoit ces pièces, distribuées en file continue sur un rail magasin (2) par un dispositif auxiliaire et les amenant une par une dans une orientation et une position précises pour être reprises par un porte-pièces (15), le dispositif comportant un basculeur (3) actionnable par un vérin (5) entre une première position relevée et une deuxième position basculée, ce basculeur (3) comportant un support (6, 7) faisant suite au rail magasin (2) dans la position relevée du basculeur pour recevoir la première pièce (1) du magasin, des moyens de butée (8) arrêtant l'ensemble des pièces, ce support comportant également un dispositif de retenue (9) agencé pour empêcher l'échappement de la pièce située sur le basculeur pendant le basculement de celui-ci, caractérisé en ce que le dispositif sépare, oriente et positionne des pièces de forme sensiblement plate approvisionnées à plat sur le rail magasin, l'ensemble comportant en outre des touches d'arrêt (18, 19) portées par une pièce basculante (16) rappelée par un ressort de rappel (20) pour arrêter la première pièce (1) restant sur le rail (2) lors du basculement du basculeur, avec un mécanisme permettant de dégager ces touches (18, 19) de leur position active lorsque le basculeur (3) est en position relevée, le dispositif de retenue (9) étant monté coulissant horizontalement et parallèlement au support (6, 7) et comportant deux doigts (10, 11) disposés de manière à permettre le passage de chaque nouvelle pièce sous ces doigts, mais en même temps à pouvoir libérer le contour de la pièce pour une extraction perpendiculaire à l'aide d'une faible course du dispositif de retenue (9).

2. Dispositif selon la revendication 1, caractérisé par le fait que le dispositif de retenue (9) est rappelé en position active par un ressort (13) et qu'il comporte une rampe (14) coopérant avec un doigt porté par le porte-pièces (15) afin de produire ladite faible course de dégagement des doigts (10, 11) par le seul effet du porte-pièces (15) lorsque le basculeur (3) est en position basculée.

3. Dispositif selon l'une des revendications précédentes, caractérisé par le fait que la pièce basculante (16) portant les touches d'arrêt (18, 19) est rappelée en position active par un ressort de rappel (20) et que le mécanisme de dégagement de ces touches est constitué par un galet (22) constituant suiveur de came et coopérant avec une came (23) portée par le basculeur (3) pour produire ce dégagement lors de sa fin de course en position relevée.

## Patentansprüche

1. Vorrichtung zum Trennen, Richten und Positionieren von Werkstücken (1), welche diese Werkstücke aufnimmt, die in kontinuierlicher Reihe entlang einer Zufuhrschiene (2) mittels einer Hilfsanordnung verteilt sind und sie einzeln in genauer Ausrichtung und Position zuführt, so dass sie von einem Werkstückgreifer (15) erfasst werden, wobei die Vorrichtung eine Kippanordnung (3) aufweist, die durch eine Hebeanordnung (5) zwischen einer ersten, angehobenen Stellung und einer zweiten, gekippten Stellung betätigbar ist, wobei die Kippanordnung (3) eine Halterung (6, 7) enthält, die sich an die Zufuhrschiene anschliesst in der angehobenen Stellung der Kippanordnung zur Aufnahme des ersten Werkstücks (1) vom Vorrat, die Anschlagmittel (8) enthält, die die Gesamtheit der Werkstücke zum Stillstand bringt und die Halterung ausserdem eine Rückhalteanordnung (9) enthält, die in der Lage ist, ein Entfernen des auf der Kippanordnung befindlichen Werkstücks während des Kippens zu verhindern, dadurch gekennzeichnet, dass die Vorrichtung die im wesentlichen flachen, flach von der Zufuhrschiene angelieferten Werkstücke trennt, richtet und positioniert, dass die Gesamtheit ausserdem Haltetasten (18, 19) aufweist, die von einem kippbaren Teil (16) getragen werden, das durch eine Rückholfeder (20) beaufschlagt wird, um das erste auf der Zufuhrschiene (2) verbleibende Werkstück 1 anzuhalten während des Kippens der Kippanordnung, mit einem Mechanismus, der das Lösen der Tasten (18, 19) aus ihrer wirksamen Stellung ermöglicht, wenn die Kippanordnung (3) in der angehobenen Stellung ist, wobei die Rückhalteanordnung (9) horizontal und parallel zur Halterung (6, 7) gleitend angeordnet ist und zwei Finger (10, 11) aufweist, die derart angeordnet sind, dass der Durchgang eines jeden neuen Werkstücks unter diesen Fingern ermöglicht wird, aber zugleich der Umfang des Werkstücks freigegeben werden kann für eine senkrechte Abnahme durch eine geringe Bewegung der Rückhalteanordnung (9).

2. Vorrichtung nach Anspruch 1, dadurch gekennzeichnet, dass die Rückhalteanordnung (9) in ihre wirksame Stellung durch eine Feder (13) beaufschlagt wird und dass sie ein Gleitstück (14) aufweist, das mit einem Finger zusammenwirkt, der vom Werkstückgreifer (15) getragen wird, um so die geringe Lösebewegung der Finger (10, 11) zu ermöglichen, allein durch Einwirkung des Werkstückgreifers (15), wenn die Kippanordnung (3) in der gekippten Stellung ist.

3. Vorrichtung nach einem der vorhergehenden Ansprüche, dadurch gekennzeichnet, dass das kippbare Teil (16), das die Haltetasten (18, 19) trägt, in die wirksame Stellung durch eine Rückholfeder (20) beaufschlagt wird und dass der Lösemechanismus dieser Tasten aus einer Rolle (22) besteht, die als Nockenfolger ausgebildet ist und mit einem Nocken (23) zusammenwirkt, der von der Kippanordnung (3) getragen ist, um so ein Lösen am Ende seiner Bewegung in die angehobene Stellung zu bewirken.

## Claims

1. Apparatus for separating, orienting and positioning components (1), which receives said components distributed in a continuous row on a storage rail (2) by an auxiliary device and moving them one by one into a precise orientation and position to be picked up by a component carrier means (15), the apparatus comprising a rocker member (3) which is actuable by a jack (5) between a first raised position and a second rocked position, said rocker member (3) comprising a support (6, 7) following on from the storage rail (2) in the raised position of the rocker member to receive the first component (1) from the storage means, abutment means (8) stopping the array of the components, said support also comprising a retaining means (9) arranged to prevent escape of the component disposed on the rocker member during the rocking movement thereof, characterised in that the apparatus separates, orients and positions components of substantially flat form, which are supplied in a flat position on the storage rail, the assembly further comprising stop keys (18, 19) carried by a rocking member (16) which is returned by a return spring (20) to arrest the first component (1) remaining on the rail (2) upon the rocking movement of the rocker member, with a mechanism permitting said stop keys (18, 19) to be disengaged from their active position when the rocker member (3) is in the raised position, the retaining means (9) being mounted for horizontal sliding movement parallel to the support (6, 7) and comprising two fingers (10, 11) which are so disposed as to permit each new component to pass beneath said fingers but at the same time to be able to free the contour of the component for a perpendicular extraction operation by means of a short travel movement of the retaining means (9).

2. Apparatus according to claim 1, characterised in that the retaining means (9) is returned to its active position by a spring (13) and that it comprises a ramp means (14) co-operating with a finger carried by the component carrier means (15) in order to produce said short travel movement for disengagement of the fingers (10, 11) just by the effect of the component carrier means (15) when the rocker member (3) is in the rocked position.

3. Apparatus according to one of the preceding claims, characterised in that the rocking member (16) carrying the stop keys (18, 19) and returned to the active position by a return spring (20) and that the mechanism for disengagement of said stop keys comprises a roller (22) which forms a cam follower and which co-operates with a cam (23) carried by the rocker member (3) to produce said disengagement at the end of its travel movement in the raised position.

# FIG.1

## FIG.2

# FIG.3